# EUROPÄISCHE PATENTSCHRIFT

(11) **EP 1 179 455 B1**
(45) Veröffentlichungstag und Bekanntmachung des Hinweises auf die Patenterteilung: **07.09.2005**
(21) Anmeldenummer: 01250263.9
(22) Anmeldetag: 16.07.2001
(51) Int. Cl.: B60R 21/16

(54) **Verfahren zur Faltung eines Gassacks und Vorrichtung zur Durchführung des Verfahrens**
Method for folding an airbag and device for carrying out this method
Méthode de pliage d'un coussin de sécurité et dispositif de mise en oeuvre de cette méthode

(30) Priorität: 07.08.2000 DE 10039554
(43) Veröffentlichungstag der Anmeldung: 13.02.2002
(73) Patentinhaber: Takata-Petri AG, 63743 Aschaffenburg (DE)
(72) Erfinder: Farwig, Imre, 16359 Biesenthal (DE); Pausch, Tobias, 13189 Berlin (DE); Zeller, Alexander, 10439 Berlin (DE); Krause, Hubertus, 16515 Zühlsdorf (DE)
(74) Vertreter: Müller, Wolfram Hubertus

(56) Entgegenhaltungen:
- WO-A-99/20492
- DE-A- 19 751 685
- DE-U- 29 809 356

## Beschreibung

Die Erfindung betrifft ein Verfahren zur Faltung eines Gassacks nach dem Oberbegriff des Anspruchs 1 und eine Vorrichtung zur Durchführung des Verfahrens.

Aus der Druckschrift DE-A 197 54 078 ist es bekannt, einen Gassack für einen Airbag mit einem zieharmonikaartigen Faltenverlauf zu versehen. Hierzu sind mehrere, in Transportrichtung des Gassackes hintereinander angeordnete Faltstationen vorgesehen, die jeweils bewegbare Scheibenpaare zur Faltung des Gassackes aufweisen. Nach Verlassen der letzten Faltstation werden die erzeugten Falten in gegenseitige Anlage gebracht. Zur Herstellung der gewünschten Faltung ist bei dem bekannten Verfahren aufgrund der Vielzahl der benötigten Maschinenelemente ein hoher maschineller Aufwand erforderlich.

Aus der Druckschrift DE-A 195 35 564 ist ein Verfahren zur Faltung eines Gassackes bekannt, bei dem ein ausgebreiteter leerer Gassack auf ein Zentrum hin zusammengerafft wird. Das Zusammenraffen des Gassacks erfolgt durch mindesten einen Schieber. In einer Ausführungsform ist vorgesehen, dem Gassack durch mechanische Formelemente eine Vorfaltung zu geben. Nachteilig muß der Gassack dabei über seine gesamte Länge auf einer Grundplatte aufliegen und von einer Deckplatte abgedeckt sein. Auch ist als nachteilig anzusehen, daß zum Falten des Gassacks mindestens ein Schieber und eine zugehörige Antriebseinheit erforderlich sind.

Weiter ist es bekannt, zum Falten und Verpacken eines Kopf- oder Windowbags dem Gassack in einem ersten Arbeitsgang eine gewünschte Faltenlage zu geben (etwa mit den oben beschriebenen Verfahren) und anschließend in einem zweiten Arbeitsgang in einen flexiblen Gewebeschlauch einzuziehen oder alternativ direkt in ein festes Gehäuse zu falten. Das Falten des Luftsackes erfolgt durch Schieber oder Schwerter und ist dementsprechend aufwendig.

Die DE 198 45 721 A1 beschreibt ein Verfahren, bei dem ein ausgebreiteter Gassack relativ zu einer Fokussiereinrichtung bewegt wird. Dabei wird der Gassack in der Fokussiereinrichtung sowohl seitlich zusammengefaltet als auch axial mittels eines Schiebers zusammengedrückt. Anschließend erfolgt stoßweise ein Ausstoß des gefalteten Gassacks in ein Aufnahmegehäuse. Dieses bekannte Verfahren benötigt einen Schieber zum axialen Zusammenschieben des Gassackes und Auswerfen in eine Aufnahmevorrichtung und ist dadurch relativ aufwendig. Auch ist durch die Verwendung eines Schiebers die Geschwindigkeit der Faltung des Gassacks begrenzt.

Die WO 99/20492A offenbart ein gattungsgemäßen Verfahren und eine gattungsgemäß vorrichtung.

Der vorliegenden Erfindung liegt die Aufgabe zugrunde, ein Verfahren zur Faltung eines Gassackes und eine Vorrichtung zur Durchführung des Verfahrens zur Verfügung zu stellen, die ein besonders schnelles und kostengünstiges Falten eines Gassacks ermöglichen.

Diese Aufgabe wird erfindungsgemäß durch ein Verfahren mit den Merkmalen des Anspruchs 1 und eine Vorrichtung mit den Merkmalen des Anspruchs 10 gelöst. Bevorzugte und vorteilhafte Ausgestaltungen der Erfindung sind in den Unteransprüchen angegeben.

Danach zeichnet sich das erfindungsgemäße Verfahren dadurch aus, daß der ausgebreitete Gassack kontinuierlich relativ zu einer Fokussiereinrichtung bewegt, dabei auf einen definierten Querschnitt zusammengefaltet und kontinuierlich aus der Fokussiereinrichtung herausgeführt wird. Der Gassack wird bei Durchlaufen der Fokussiereinrichtung automatisch zusammengefaltet, ohne daß es hierzu Schiebern, Schwerter oder anderer beweglicher Teile bedarf. Dadurch entsteht eine einfache und kostengünstige Lösung. Auch kann ein Gassack schnell zusammengefaltet werden, da die Geschwindigkeit der Faltung sich allein aus der Geschwindigkeit ergibt, mit der der Gassack relativ zur Fokussiereinrichtung bewegt wird. Eine Begrenzung der Faltgeschwindigkeit durch die Verstellgeschwindigkeit von Schiebern oder anderen beweglichen Teilen entfällt damit.

Der Gassack wird bei Durchlaufen der Fokussiereinrichtung auf einen definierten Querschnitt zusammengefaltet und dabei kontinuierlich wieder aus der Fokussiereinrichtung herausgeführt. Der Querschnitt, aus den der Gassack zusammengefaltet wird, ist dabei gleich dem Ausgangsquerschnitt der Fokussiervorrichtung ist. In der Fokussiereinrichtung durchläuft der Gassack einen sich verjüngenden Faltbereich, in dem das Zusammenfalten des Gassacks auf den definierten Querschnitt erfolgt.

Unter einem ausgebreiteten Gassack im Sinne der Erfindung ist ein nicht gefalteter Gassack zu verstehen, d.h. der Gassack kann flächig ausgebreitet oder alternativ mit Druckluft gefüllt sein. Eine Relativbewegung des Gassacks gegenüber der Fokussiereinrichtung beinhaltet sowohl den Fall, daß ein Gassack relativ zu einer feststehenden Fokussiereinrichtung bewegt wird, als auch den Fall, daß eine Fokussiereinrichtung relativ zu einem festgespannten Gassack bewegt wird.

In einer bevorzugten Weiterbildung der Erfindung befindet sich der Gassack sich nach dem Verlassen der Fokussiereinrichtung in einem fertig gefalteten Zustand. Damit sind keine weiteren Schritte notwendig, um den Gassack auf das zum Verstauen notwendige Maß zu bringen.

Insbesondere weist der Gassack nach dem Verlassen der Fokussiereinrichtung bevorzugt eine Ausdehnung in Längsrichtung auf, die im wesentlichen der Länge einer länglichen Verpakkung des Gassacks entspricht. Dementsprechend ist ein leichtes Verstauen des Gassacks unmittelbar nach Durchlaufen der Fokussiereinrichtung möglich.

Bevorzugt wird der ausgebreitete Gassack über die Fokussiereinrichtung direkt in eine längliche Gassackverpackung eingezogen. Das Zusammenfalten des Gassackes und das Ziehen in die Verpackung erfolgen in einem Arbeitsgang. Der Querschnitt des gefalteten Gassacks am Ausgang der Fokussiereinrichtung entspricht dabei im wesentlichen dem Querschnitt der sich an die Fokussiereinrichtung anschließenden Verpackung.

Diese Ausführungsform der Erfindung ermöglicht eine schnelle und einfache Faltung und Verpackung eines Gassacks in einem Arbeitsgang und ist für sämtliche Gassäcke geeignet, bei denen die Ausdehnung des Gassacks in Längsrichtung im wesentlichen der Länge der Verpackung entspricht. Insbesondere trifft dies auf Gassäcke einer Seitenaufprall-schutzeinrichtung eines Fahrzeugs zu (Kopf- oder Windowbags).

In einer weiteren bevorzugten Ausgestaltung der Erfindung wird der Gassack zunächst horizontal ausgebreitet. Bei Durchlaufen der Fokussiereinrichtung wird der Gassack anschließend in der horizontalen Ebene in Querrichtung verjüngt, wobei der Gassack zum Ausgang der Fokussiereinrichtung automatisch zusammengefaltet wird. Die vertikale Ausdehnung der Fokussiereinrichtung, die die maximale Faltenhöhe des gefalteten Gassackes vorgibt, bleibt dagegen im wesentlichen konstant.

In einer vorteilhaften Weiterbildung der Erfindung erfährt der Gassack bei Durchlaufen der Fokussiereinrichtung eine Vororientierung hinsichtlich seiner Faltenlage. Hierzu sind entsprechende Vororientierungselemente im Faltbereich der Fokussiereinrichtung angeordnet. Durch eine Vororientierung der Faltenlage läßt sich der Gassack geordneter zusammenfalten. Dabei ist insbesondere vorgesehen, dem Gassack durch die Vororientierung eine zieharmonikaartige Faltung mit sich gleichmäßig abwechselnden oberen und unteren Faltenkanten der Faltung zu geben, die sich in axialer Richtung des Gassacks erstrecken.

Jedoch wird darauf hingewiesen, daß die erfindungsgemäße Faltung auch ohne eine Vororientierung des Faltenverlaufs erfolgen kann, wobei sich beim Falten eine relativ ungeordnete, im wesentlichen axial verlaufende Faltenlage ergibt. Auch mit einer solchen Faltenlage läßt sich ein Airbag im Auslösefall sicher entfalten.

Der Gassack wird bevorzugt mittels eines an einem Ende des Gassackes befestigten Zugmittels durch die Fokussiereinrichtung und in die Verpackung gezogen. Bei dem Zugmittel handelt es sich um ein ohnehin am Gassack vorgesehenes Spannband oder alternativ um ein bandartiges Hilfsmittel, welches zur Faltung des Gassackes an diesem befestigt und nach dem Falten und Verpacken des Gassackes wieder entfernt wird. Das Zugmittel, das an einem Ende des Gassackes befestigt ist, wird zunächst durch die Fokussiereinrichtung und die Verpackung gefedelt. Anschließend wird eine Zugkraft auf das Zugmittel ausgeübt, um den Gassack durch die Fokussiereinrichtung in die Verpackung zu ziehen.

Beim Einziehen des Gassackes in die Verpackung ist bevorzugt vorgesehen, Befestigungslaschen des Gassackes im Bereich seitlicher Öffnungen der Verpackung zu positionieren und anschließend aus den zeitlichen Öffnungen zu ziehen. Hierdurch kann die Verpackung über die Befestigungslaschen etwa am Dachrahmen eines Fahrzeugs befestigt werden.

Es wird darauf hingewiesen, daß es sich bei der Verpackung um ein beliebiges längliches Element zur Aufnahme eines Gassackes handeln kann. Insbesondere handelt es sich bei der Verpackung um ein flexibles Cover, wie etwa einen Gewebeschlauch, oder ein Gehäuse.

Die erfindungsgemäße Vorrichtung weist eine feststehende Fokussiereinrichtung auf, die einen ausgebreiteten Gassack bei Durchlaufen der Fokussiereinrichtung auf einen vorgegebenen Querschnitt zusammenfaltet. Die Fokussiereinrichtung ist dabei derart ausgebildet, daß der zusammengefaltete Gassack kontinuierlich aus der Fokussiereinrichtung herausführbar ist.

Die erfindungsgemäße Vorrichtung zeichnet sich dadurch aus, daß sie keine beweglichen Teile aufweist, die eine Relativbewegung gegenüber anderen Teilen der Vorrichtung bzw. gegenüber dem Gassack zu dessen Faltung ausüben. Entsprechend kann die Vorrichtung zur Faltung des Gassackes einfach und kostengünstig ausgebildet werden. Bei der erfindungsgemäßen Vorrichtung wird der Gassack relativ zu der Fokussiereinrichtung bewegt, wobei den Faltbereich begrenzende, zusammenlaufende Teile automatisch ein Zusammenfalten des Gassackes bewirken.

Die Fokussiereinrichtung weist bevorzugt einen Eingang mit einem Eintrittsquerschnitt und einen Ausgang mit einem Aufgangsquerschnitt auf, wobei der Eintrittsquerschnitt kleiner als der Ausgangsquerschnitt ist. Hierdurch wird gewährleistet, daß ein Gassack bei Durchlaufen der Fokussiereinrichtung auf den Ausgangsquerschnitt zusammengefaltet wird.

Die Fokussiereinrichtung ist bevorzugt trichterförmig bzw. konisch ausgebildet, wobei die Trichterform je nach Ausführungsform sowohl in einer Ebene (xy-Ebene) als auch in zwei Ebenen (xy-Ebene und zx-Ebene) bzw. dreidimensional vorliegen kann. Bevorzugt ist eine trichterförmige bzw. konische Ausbildung lediglich in einer Ebene vorgesehen, wobei ein flächig ausgebreiteter Gassack bei Passieren der Fokussiereinrichtung in Querrichtung auf den Ausgangsquerschnitt verjüngt und zusammengefaltet wird.

An den Ausgang der Fokussiereinrichtung schließt sich die längliche Gassackverpackung an. Dementsprechend weist der Ausgang der Fokussiereinrichtung Mittel zur Befestigung der Gassackverpackung auf, etwa ein Rohr, auf das das eine Ende der Gassackverpackung gestülpt wird. Der Querschnitt der Eingangsöffnung der Verpackung entspricht im wesentlichen dem Ausgangsquerschnitt der Fokussiereinrichtung.

In einer ersten Ausgestaltung der Fokussiereinrichtung weist diese eine Grundplatte auf, auf der beabstandet ein erster und ein zweiter rechteckiger Rahmen angebracht sind, durch die der Gassack zur Faltung geführt wird. Der ersten Rahmen bildet dabei den Eintrittsquerschnitt und der zweite Rahmen den Ausgangsquerschnitt der Fokussiereinrichtung aus. Gegebenenfalls können zwischen den beiden Rahmen weitere Rahmen angeordnet sein, deren Querschnitt dem trichterförmigen Verlauf der Fokussiereinrichtung entspricht. Die rechteckigen Rahmen werden beispielsweise durch U-förmige Elemente ausgebildet, die fest mit der Grundplatte verbunden sind.

Diese Ausgestaltung der Erfindung realisiert auf einfache Weise eine Fokussiereinrichtung, die lediglich aus einer Grundplatte und zwei U-förmigen Elementen besteht. Dabei braucht der Gassack beim Einlegen nur im Faltbereich zwischen dem ersten und dem zweiten Rahmen von der Grundplatte unterstützt werden, so daß die Vorrichtung einen nur geringen Platzbedarf besitzt. Keineswegs ist es wie im Stand der Technik erforderlich, daß sich die Grundplatte über die gesamte Fläche des ausgebreiteten Gassackes erstreckt.

Die rechteckigen Rahmen weisen bevorzugt stets die gleiche Höhe auf, so daß eine Verjüngung und Faltung des Gassackes nur in der horizontalen Ebene, in der sich der ausgebreitete Gassack befindet, erfolgt. Die Höhe der Rahmen entspricht dabei der maximalen Höhe der Faltflächen des gefalteten Gassackes und zweckmäßigerweise im wesentlichen der vertikalen Ausdehnung der Gassackverpackung.

Jedoch sind auch Anordnungen denkbar, bei denen sich die Höhe der rechteckigen Rahmen ebenfalls in Richtung des Ausgangs der Fokussiereinrichtung verringert, so daß neben einem horizontal auch ein vertikal sich verjüngender Faltbereich vorgesehen sind. Eine solche Ausgestaltung ist insbesondere dann sinnvoll, wenn der Gassack anfangs nicht flächig vorliegt, etwa vor dem eigentlichen Faltvorgang mit Druckluft gefüllt wird.

In einer zweiten Ausgestaltung der erfindungsgemäßen Fokussiereinrichtung sind eine Grundplatte, eine darüber angeordnete Deckplatte und zwei den Abstand zwischen Grundplatte und Deckplatte festlegende, winklig zueinander angeordnete und auf der Grundplatte befestigte Seitenwände vorgesehen. Dabei wird wiederum eine trichterförmige Einrichtung definierter Höhe gebildet.

Die Vorrichtung weist mit Vorteil Vororientierungsmittel zur Vororientierung des Faltenverlaufs bei Zusammenfalten des Gassackes auf. Diese Vororientierungsmittel sind zwischen dem Eintrittsquerschnitt und dem Ausgangsquerschnitt im Faltbereich der Vorrichtung angeordnet. Durch die Vororientierungsmittel ist es möglich, wie weiter oben bereits ausgeführt, einen geordneteren Faltenverlauf zur Verfügung zu stellen. Die Vororientierungsmittel geben dem zu faltenden Gassack dabei bevorzugt eine zieharmonikaartige Faltung mit einer in axialer Richtung verlaufenden Faltenlage. Bei einer derartigen Faltenlage kann der Gassack besonders einfach in die Verpackung eingezogen und in dieser angeordnet werden.

Die Vororientierungsmittel werden durch mit der Grund- und/oder Deckplatte verbundene Elemente oder durch durch die Grund- und/oder Deckplatte hindurch in den dazwischenliegenden Raum einfahrbare Elemente ausgebildet, beispielsweise durch abwechselnd mit der Grundplatte und Deckplatte verbundene vertikale Stege oder Stifte.

Bei Ausbildung der Fokussiereinrichtung durch eine Grundplatte und daran angeordnetem Rahmen sind die Vororientierungsmittel bevorzugt an dem ersten oder einem zwischen dem ersten und dem zweiten Rahmen angeordneten weiteren Rahmen ausgebildet bzw. durch einen solchen Rahmen in den Faltraum einfahrbar.

Die Erfindung wird nachfolgend unter Bezugnahme auf die Figuren der Zeichnung anhand mehrerer Ausführungsbeispiele näher erläutert. Es zeigen:
- Fig. 1 -: eine schematische Ansicht eines Gassakkes einer Seitenaufprall-Schutzeinrichtung im ausgebreiteten Zustand;
- Fig. 2 -: die Anordnung des Gassackes der Figur 1 in einer ersten Ausführungsform einer Faltvorrichtung;
- Fig. 3 -: die Anordnung des Gassackes der Figur 1 in einer zweiten Ausführungsform einer Faltvorrichtung;
- Fig. 4 -: den Gassack und die Faltvorrichtung der Figur 3 mit einer sich an die Faltvorrichtung anschließenden flexiblen Verpackung;
- Fig. 5 -: den Gassack und die Faltvorrichtung der Figur 3 mit einer sich an die Faltvorrichtung anschließenden starren Verpackung;
- Fig. 6 -: den Gassack, die Faltvorrichtung und die Verpackung der Figur 4, wobei der Gassack bereits teilweise in der Verpackung verstaut ist;
- Fig. 7 -: einen vollständig in der Verpackung verstauten Gassack, wobei Befestigungslaschen des Gassackes aus seitlichen Öffnungen der Verpackung herausgezogen sind,
- Fig. 8 -: einen Schnitt durch die Faltvorrichtung der Figur 3 entlang der Linie 8-8 und
- Fig. 9 -: einen Schnitt durch eine Vorrichtung zur Vororientierung des Gassackes und den zugehörigen Faltenverlauf eines Gassackes.

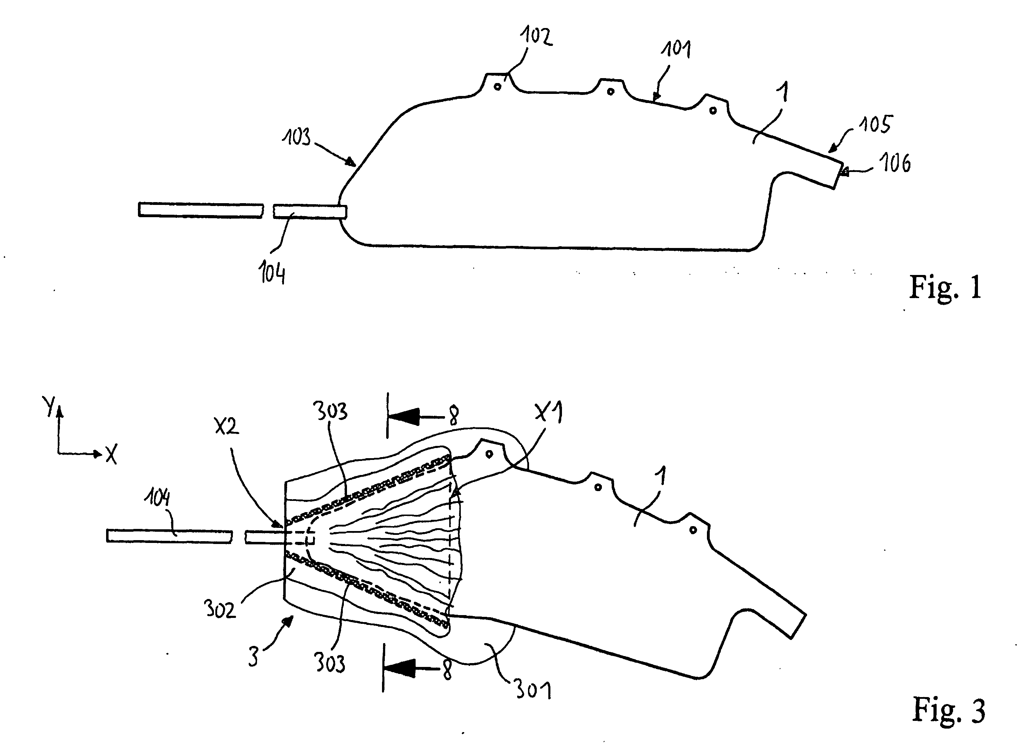

Figur 1 zeigt einen an sich bekannten Gassack 1 einer Seitenaufprall-Schutzeinrichtung im ausgebreiteten Zustand. Ein solcher Gassack erstreckt sich im aufgeblasenen Zustand von einem Bereich seitlich eines Frontinsassen bis zu einem Bereich seitlich eines Heckinsassen. Dadurch wird ein Aufprall des Kopfes oder anderer Gliedmaßen eines Fahrzeuginsassen gegen eine Seitenscheibe oder Fahrzeugsäule des Fahrzeuges verhindert und sichergestellt, daß der Kopf oder andere Gliedmaßen bei einer Seitenkollision einschließlich einem Überschlag des Fahrzeugs oder einer Folgekollision nicht aus dem Fahrzeug herauspendeln.

Der obere Rand 101 des Gassackes ist dem Verlauf der Dachkante des Fahrzeugs, in dem der Gassack installiert wird, angepaßt und mit Befestigungslaschen 102 versehen. Die Befestigungslaschen 102 ermöglichen eine punktuelle Befestigung des Gassackes 1 an der Dachkante bzw. am Dachrahmen des Fahrzeugs.

An dem einen Ende 103 des Gassackes, das im folgenden als vorderes Ende bezeichnet wird, ist ein Spannband 104 befestigt. Über das Spannband 104 wird bei Aktivierung der Seitenaufprall-Schutzeinrichtung eine Zugkraft auf den Gassack 1 ausgeübt, um den aufgeblasenen Gassack 1 zu spannen und zu fixieren und dadurch einen dauerhaften Schutz gegen das seitliche Herauspendeln des Kopfes oder anderer Gliedmaßen der Fahrzeuginsassen bereitzustellen. Am gegenüberliegenden Ende des Gassackes 1, das im folgenden als hinteres Ende 105 bezeichnet wird, weist der Gassack eine Gaseintrittsöffnung 106 auf, durch die bei Aktivieren eines zugeordneten Gasgenerators Gas in den Gassack 1 strömt.

Der in Figur 1 dargestellte Gassack für eine Seitenaufprall-Schutzeinrichtung ist im nicht aktivierten Zustand in einer länglichen Gassackverpackung zusammengefaltet, die wahlweise als flexibles Cover, insbesondere als Gewebeschlauch, oder als festes Gehäuse ausgebildet und zumindest partiell am Dachrahmen befestigt ist. Im folgenden werden Verfahren und Vorrichtung beschrieben, mit denen der Gassack gemäß Figur 1 faltbar und in derartige Gassackverpackungen einbringbar ist.

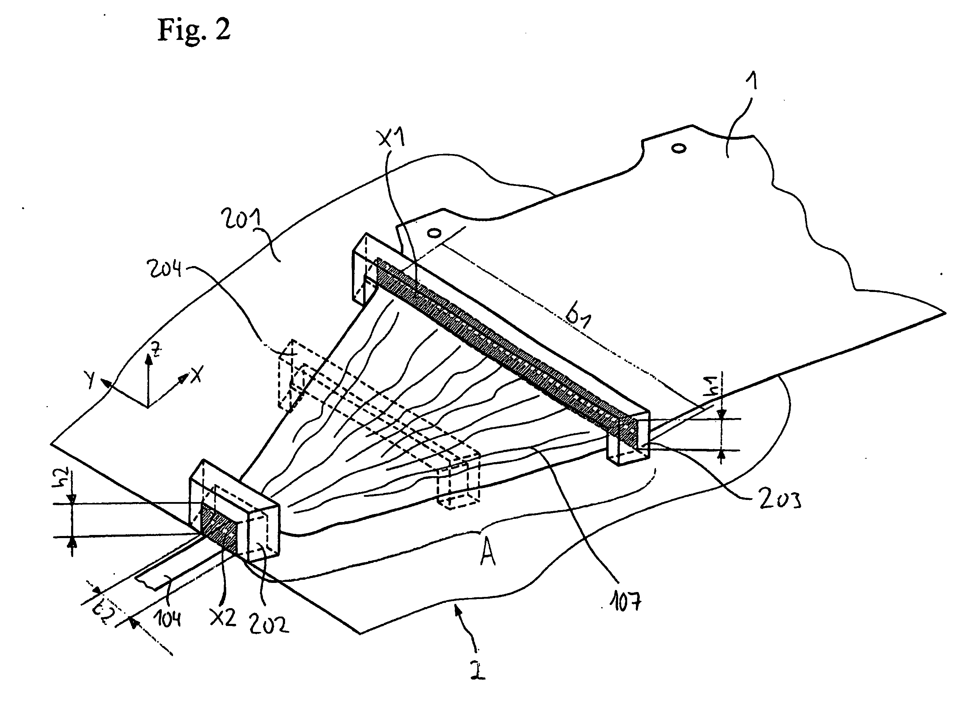

In dem Ausführungsbeispiel der Figur 2 weist eine Faltvorrichtung 2 eine Grundplatte 201 auf, auf der zwei U-förmige, fest mit der Grundplatte verbundene Elemente 202, 203 angeordnet sind. Die beiden Elemente 202, 203 bilden zusammen mit der Grundplatte 201 rechteckige Rahmen aus, die einen Eintrittsquerschnitt X1 und einen Austrittsquerschnitt X2 unterschiedlicher Größe für den zu faltenden Gassack 1 definieren und zwischen sich einen Faltbereich A ausbilden.

Der Eintrittsquerschnitt X1 wird dabei definiert durch die Breite b1 der Eintrittsöffnung des Elements 203 in y-Richtung und der Höhe h1 der Eintrittsöffnung in z-Richtung. Dementsprechend wird der Austrittsquerschnitt X2 am Element 202 definiert durch die Breite b2 der Austrittsöffnung des Elements 202 in y-Richtung und die Höhe h2 in z-Richtung.

Die Breite b1 des Eintrittsquerschnitts X1 entspricht im wesentlichen der Ausdehnung des Gassackes 1 in y-Richtung, so daß der Gassack 1 problemlos durch den Eintrittsquerschnitt X1 gezogen werden kann. Die Größe des Austrittsquerschnitts X2 entspricht im wesentlichen der Größe des Querschnitts einer sich anschließenden Gassackverpackung, in die der Gassack 1 nach dem Faltvorgang gezogen wird.

Zusätzlich zu den beiden Elementen 202, 203 können im Faltbereich A weitere U-förmige Elemente angeordnet sein, die entsprechend dimensioniert sind. Ein weiteres derartiges Element 204 ist in Figur 2 gestrichelt dargestellt.

Zum Falten des Gassackes 1 wird dieser zunächst auf der Grundplatte 201 ausgebreitet, wobei die Grundplatte 201 lediglich eine Größe aufweisen muß, die es erlaubt, den Faltbereich A darauf zu verwirklichen. Nach Ausbreiten des Gassackes 1 auf der Grundplatte 201 wird das Spannband 104 durch die beiden U-förmigen Elemente 203, 202 gefädelt und im Bereich des Austrittsquerschnitts X2 aus der Faltvorrichtung 2 herausgeführt.

Anschließend wird am Spannband 104 gezogen, bis es nahezu vollständig aus der Vorrichtung 2 herausragt. Dabei wird der Gassack 1 in dem sich an das Spannband 104 anschließenden Bereich kontinuierlich in Falten gelegt. Entsprechende Falten 107 des Gassackes sind in Figur 2 angedeutet.

Weiter wird das Spannband 104 durch die sich an den Austrittsquerschnitt X2 anschließende Verpackung gefädelt und diese in geeigneter Weise im Bereich des Austrittsquerschnitt X2 am Element 202 fixiert (vgl. hierzu auch Figuren 4 und 5 für die allerdings etwas anders gestaltete Faltvorrichtung der Figur 3.)

Bei weiterem Ziehen am Spannband 104 wird der Gassack 1 durch die trichterförmige Anordnung der Elemente 203, 202 automatisch auf das Packmaß zusammengefaltet und nach dem Zusammenfalten sogleich in die Verpackung eingezogen. Die dabei entstehenden Falten weisen eine Höhe auf, die durch die Höhe h2 des Austrittsquerschnitts festgelegt wird.

Sofern der Gassack 1 nach Verlassen der Faltvorrichtung nicht in eine Verpackung eingezogen, sondern beispielsweise in bestimmten Abständen zur Fixierung mit ringartigen Elementen umgeben wird, so ist auch dies ohne weitere Schritte möglich, da sich der Gassack nach Verlassen der Faltvorrichtung in einem fertig gefalteten Zustand befindet.

Es ist bei der Faltvorrichtung 2 der Figur 2 vorgesehen, daß die Höhe h1 des Eintrittsquerschnitts X1 gleich der Höhe des h2 des Austrittsquerschnitts X2 ist. Jedoch kann in anderen Ausführungsformen (nicht dargestellt) h1 auch größer als h2 sein, wobei sich in diesem Falle der Faltbereich A sowohl in horizontaler als auch in vertikaler Richtung zum Austrittsquerschnitt X2 hin verjüngt.

Figur 3 zeigt eine alternative Ausgestaltung einer Faltvorrichtung 3. Die Faltvorrichtung besteht aus einer Grundplatte 301, einer parallel dazu angeordneten Deckplatte 302 und zwischen Grundplatte 301 und Deckplatte 302 winklig zueinander angeordneten Seitenwänden 303. Die beiden Seitenwände 303 laufen trichterförmig zusammen, wobei sie einen Eintrittsquerschnitt X1 und einen Austrittsquerschnitt X2 sowie einen dazwischenliegenden Faltbereich definieren. Die Höhe der Seitenwände 303 definiert die gewünschte Faltenhöhe des zu faltenden Gassackes 1.

Die Seitenwände 303 sind fest mit der Grundplatte 301 verbunden. Die Deckplatte 302 wird nach Einlegen des Gassackes 1 und der Vorpositionierung des Spannbandes 104 zur Anlage gebracht. Es liegt dann zwischen Eintrittsquerschnitt X1 und Austrittsquerschnitt X2 ein seitlich, oben und unten geschlossener Faltbereich vor, dessen Querschnitt sich in Richtung des Austrittsquerschnitts X2 kontinuierlich entsprechend der trichterförmigen Anordnung der Seitenwände 303 verjüngt.

Durch Ziehen an dem Spannband 104 wird der Gassack 1, wie in Bezug auf Figur 2 beschrieben, gefaltet und ggf. sogleich in eine sich an den Austrittsquerschnitt X2 anschließende Gassackverpackung gezogen.

Der Unterschied des Ausführungsbeispiels der Figur 3 gegenüber dem Ausführungsbeispiel der Figur 2 besteht im wesentlichen darin, daß bei dem Ausführungsbeispiel der Figur 3 der Faltbereich an der Seite und oben vollkommen geschlossen ist.

Es wird darauf hingewiesen, daß die Deckplatte 302 nicht notwendigerweise parallel zur Grundplatte 301 verläuft. In alternativen Ausführungsformen (nicht dargestellt) ist die Deckplatte winklig zur Grundplatte angeordnet, wobei die Höhe der Seitenwände die Höhe des sich in Zugrichtung vertikal verjüngenden Faltbereichs vorgibt.

Des weiteren wird darauf hingewiesen, daß weder bei dem Ausführungsbeispiel der Figur 2 noch bei dem Ausführungsbeispiel der Figur 3 der Gassack 1 notwendigerweise ein Spannband 104 aufweisen muß. Sofern kein Spannband 104 vorgesehen ist, wird am Gassack 1 ein bandartiges Hilfsmittel befestigt und nach dem Falt- und Packvorgang wieder entfernt.

Die folgenden Ausführungsbeispiele der Erfindung beziehen sich auf die Faltvorrichtung der Figur 3. Wie für den Fachmann leicht ersichtlich ist, können diese Ausführungsbeispiele jedoch ebenfalls identisch oder mit leichter Abwandlung bei der Faltvorrichtung der Figur 2 verwirklicht werden.

In den Figuren 4 und 5 ist eine Verpackung 41, 42 dargestellt, die sich an die Faltvorrichtung 3 anschließt und in die der Gassack 1 eingezogen wird. Wie bereits erwähnt, entspricht der Querschnitt der Eingangsöffnung der Verpackung 41, 42 im wesentlichen dem Austrittsquerschnitt X2 der Faltvorrichtung 3. Als Verpackung wird in Figur 4 ein flexibles Cover 41 verwendet, das beispielsweise durch einen Gewebeschlauch verwirklicht wird. Die Verwendung eines flexiblen Covers weist den Vorteil auf, daß das Cover bei der Montage dem Verlauf des Stauraumes entlang der Dachkante des Fahrzeugs angepaßt werden kann.

In Figur 5 ist die Verpackung durch ein starres Gehäuse 42 verwirklicht. Die Form des starren Gehäuses 42 entspricht dabei bereits dem Verlauf des Stauraums entlang der Dachkante des Fahrzeugs.

Figur 6 zeigt den weiteren Ablauf bei dem Einziehen des gefalteten Gassackes 1 in die Verpackung 4. Durch das Ziehen am Spannband 104 wird der Gassack 1 in dem sich in Zugrichtung verringenden Querschnitt des Faltbereichs der Faltvorrichtung 3 auf das notwendige Packmaß komprimiert. Der Gassack wird dabei gleichzeitig in die sich anschließende Verpackung 4 gezogen.

In Figur 7 ist der gefaltete und vollständig in einer Verpackung 4 angeordnete Gassack 1 dargestellt. Aus der Verpakkung 4 ragen seitlich nur noch das Spannband 104 und das hintere Ende 105 des Gassacks 1 mit der Gaseintrittsöffnung 106.

Bei der dargestellten Ausführung der Verpackung 4 weist diese seitliche Öffnungen 401 auf. Der Gassack 1 wird derart in der Verpackung 4 verstaut, daß seine Befestigungslaschen 102 im Bereich der seitlichen Öffnungen 401 positioniert werden. Damit können sie nach dem Verstauvorgang durch die Öffnungen 401 gezogen und an der Dachkante befestigt werden.

Figur 8 zeigt einen Schnitt durch die Faltvorrichtung gemäß Figur 3 entlang der Linie 8-8 und verdeutlicht den Faltenverlauf des Gassackes bei Durchlaufen des sich verjüngenden Faltbereichs. Der Gassack 1 wird dabei in im wesentlichen axial verlaufende, relativ ungeordnete Falten gelegt.

Um einen geordneten, gleichmäßigen Faltenverlauf zu erzeugen, sind in der Ausführungsform der Figur 9 Vororientierungselemente 5 mit der Grund- und Deckplatte 301, 302 der Faltvorrichtung der Figur 3 verbunden. Die Vororientierungselemente 5 erstrecken sich in regelmäßiger Abfolge von der Grundplatte 301 bzw. der Deckplatte 302 in den Faltbereich. Sie können sich entlang des gesamten Faltbereichs oder aber auch nur über eine kurze Strecke erstrecken. Ihre Orientierung an der Grundplatte 301 bzw. der Deckplatte 302 ist derart, daß sie entsprechend dem sich verfüngenden Faltbereich in Richtung des Austrittsquerschnitts zusammenlaufen.

Durch die Vororientierungselemente 5 wird ein regelmäßiger und geordneter Faltenverlauf des Gassackes 1 zur Verfügung gestellt, wobei sich obere Faltkanten 61 und untere Faltkanten 62 der axial verlaufenden Falten abwechseln. Die maximale Höhe der Faltflächen 63 wird durch den Abstand zwischen der Grundplatte 301 und der Deckplatte 302 bestimmt.

Alternativ sind die Vororientierungselemente 5 nicht fest an der Grundplatte 301 bzw. der Deckplatte 302 angeordnet, sondern als durch Grund- bzw. Deckenplatte in den Faltraum einfahrbare Elemente ausgebildet.

Bei dem Ausführungsbeispiel der Figur 2 sind die Vororientierungselemente beispielsweise Bestandteil des U-förmigen Rahmens bzw. durch diesen hindurch einfahrbar. Sie sind dabei im wesentlichen als Stifte ausgebildet.

Es wird darauf hingewiesen, daß die in Bezug auf die Figuren beschriebene Faltung ebenfalls erzeugt werden kann, wenn das Spannband 104 fest eingespannt und die Fokussiereinrichtung 2, 3 mit am Austrittsquerschnitt X2 fixierter Verpackung 4, 41, 42 bewegt wird.

Die Erfindung beschränkt sich in ihrer Ausführung nicht auf die vorstehend beschriebenen Ausführungsbeispiele. Wesentlich für die Erfindung ist allein, daß ein ausgebreiteter Gassack relativ zu einer feststehenden Fokussiereinrichtung bewegt und dabei in einem sich verjüngenden Faltbereich auf einen definierten Querschnitt zusammengefaltet wird.

## Patentansprüche

1. Verfahren zur Faltung eines Gassackes, insbesondere eines Kopfbags oder Windowbags, bei dem ein ausgebreiteter Gassack (1) kontinuierlich relativ zu einer Fokussiereinrichtung (2, 3) bewegt, zusammengefaltet und kontinuierlich aus der Pokussiereinrichtung herausgeführt wird,
**dadurch gekennzeichnet,**
**daß** der Gassack (1)bei seiner Relativbewegung zu der Fokussiereinrichtung (2, 3) eine konische oder trichterförmige Struktur der Fokussiereinrichtung (2, 3) durchläuft und dabei auf einen definierten Querschnitt (X2) zusammengefaltet wird.

2. Verfahren nach Anspruch 1, **dadurch gekennzeichnet, daß** der Gassack (1) sich nach dem Verlassen der Fokussiereinrichtung (2, 3) in einem fertig gefalteten Zustand befindet.

3. Verfahren nach Anspruch 1 oder 2, **dadurch gekennzeichnet, daß** der Gassack (1) nach dem Verlassen der Fokussiereinrichtung (2, 3) eine Ausdehnung in Längsrichtung aufweist, die im wesentlichen der Länge einer länglichen Verpackung (4, 41, 42) des Gassacks entspricht.

4. Verfahren nach Anspruch 3, **dadurch gekennzeichnet, daß** der Gassack (1) über die feststehende Fokussiereinrichtung (2, 3) in eine längliche Verpackung (4, 41, 42) gezogen wird.

5. Verfahren nach mindestens einem der Ansprüche 1 bis 4, **dadurch gekennzeichnet, daß** der Gassack (1) zunächst horizontal ausgebreitet und anschließend bei Durchlaufen der Fokussiereinrichtung (2, 3) in der horizontalen Ebene in Querrichtung verjüngt wird, während die vertikale Ausdehnung des Gassacks (1) im wesentlichen konstant bleibt.

6. Verfahren nach mindestens einem der Ansprüche 1 bis 5, **dadurch gekennzeichnet, daß** der Gassack (1) bei Durchlaufen der Fokussiereinrichtung (2, 3) eine vororientierung hinsichtlich seiner Faltenlage erfährt.

7. Verfahren nach mindestens einem der Ansprüche 4 bis 6, **dadurch gekennzeichnet, daß** der Gassack (1) anhand eines an einem Ende (103) des Gassacks (1) befestigten Zugmittels (104) durch die Fokussiereinrichtung (2, 3) und in die Verpackung (4, 41, 42) gezogen wird.

8. Verfahren nach Anspruch 7, **dadurch gekennzeichnet, daß** das Zugmittel (104) durch die Fokussiereinrichtung (2, 3) und die Verpackung (4, 41, 42) gefädelt und anschlie-βend eine Zugkraft auf das Zugmittel (104) ausgeübt wird.

9. Verfahren nach mindestens einem der Ansprüche 4 bis 8, **dadurch gekennzeichnet, daß** bei Einziehen des Gassacks (1) in die Verpackung (4) Befestigungslaschen (102) des Gassacks (1) im Bereich seitlicher Öffnungen (401) der Verpackung (4) positioniert und anschließend aus den seitlichen Öffnungen (401) gezogen werden.

10. Vorrichtung zur Durchführung des Verfahrens nach Anspruch 1, mit einer Fokussiereinrichtung (2, 3), die einen ausgebreiteten Gassack (1) bei Durchlaufen der Fokussiereinrichtung (2, 3) zusammenfaltet und die derart ausgebildet ist, daß der zusammengefaltete Gassack kontinuierlich aus der Fokussiereinrichtung (2, 3) herausführbar ist,
**dadurch gekennzeichnet, daß**
die Fokussiereinrichtung (2, 3) einen Eingang mit einem Eintrittsquerschnitt (X1) und einen Ausgang mit einem Ausgangsquerschnitt (X2) aufweist, wobei der Ausgangsquerschnitt (X2) kleiner als der Eintrittsquerschnitt (X1) ist, und wobei ein Gassack (1) bei Durchlaufen der Fokussiereinrichtung (2, 3) auf den Ausgangsquerschnitt (X2) zusammengefaltet wird.

11. Vorrichtung nach Anspruch 10, **dadurch gekennzeichnet, daß** die Fokussiereinrichtung (2, 3) konisch oder trichterförmig ausgebildet ist.

12. Vorrichtung nach Anspruch 10 oder 11, **dadurch gekennzeichnet, daß** die Fokussiereinrichtung (2, 3) im Bereich des Ausgangs Mittel zur Befestigung einer länglichen Gassackverpackung (4, 41, 42) aufweist.

13. Vorrichtung nach Anspruch 12, **dadurch gekennzeichnet, daß** die längliche Verpackung (4, 41, 42) eine Eingangsöffnung aufweist, deren Querschnitt im wesentlichen dem Ausgangsquerschnitt (X2) der Fokussiereinrichtung (2, 3) entspricht.

14. Vorrichtung nach mindestens einem der Ansprüche 10 bis 13, **dadurch gekennzeichnet, daß** die Fokussiereinrichtung (2) eine Grundplatte (201) aufweist, auf der beabstandet ein erster und ein zweiter rechteckiger Rahmen (203, 202) angebracht sind, durch die der Gassack (1) geführt wird, wobei der erste Rahmen (203) den Eintrittsquerschnitt (X1) und der zweite Rahmen (202) den Ausgangsquerschnitt (X2) der Fokussiereinrichtung (2) ausbildet.

15. Vorrichtung nach Anspruch 14, **dadurch gekennzeichnet, daß** zwischen den beiden Rahmen (203, 202) ein oder mehrere weitere Rahmen (204) angeordnet sind, deren Querschnitt dem sich verjüngenden Verlauf der Fokussiereinrichtung (2) entspricht.

16. Vorrichtung nach Anspruch 14 oder 15, **dadurch gekennzeichnet, daß** die rechteckigen Rahmen (202, 203, 204) die gleiche Höhe aufweisen.

17. Vorrichtung nach mindestens einem der Ansprüche 14 bis 16, **dadurch gekennzeichnet, daß** der rechteckige Rahmen jeweils durch ein U-förmiges Element (202, 203, 204) ausgebildet wird, das fest mit der Grundplatte (201) verbunden ist.

18. Vorrichtung nach mindestens einem der Ansprüche 10 bis 13, **dadurch gekennzeichnet, daß** die Fokussiereinrichtung (3) eine Grundplatte (301), eine darüber angeordnete Deckplatte (302) und zwei den Abstand zwischen Grundplatte (301) und Deckplatte (302) festlegende, winklig zueinander angeordnete und auf der Grundplatte (301) befestigte Seitenwände (303) aufweist.

19. Vorrichtung nach mindestens einem der Ansprüche 10 bis 18, **gekennzeichnet durch** Vororientierungsmittel (5) zur Vororientierung des Faltenverlaufes bei Zusammenfalten des Gassacks (1), die zwischen dem Eintrittsquerschnitt (X1) und dem Ausgangsquerschnitt (X1) angeordnet sind.

20. Vorrichtung nach Anspruch 19, **dadurch gekennzeichnet, daß** die Vororientierungmittel (5) dem zu faltenden Gassack (1) eine ziehharmonikaartige Faltung geben.

21. Vorrichtung nach Anspruch 18 sowie 19 oder 20, **dadurch gekennzeichnet, daß** die Vororientierungsmittel durch mit der Grundplatte (301) und/oder Deckplatte (302) verbundene Elemente (5) oder durch die Grundplatte und/oder Deckplatte hindurch in den dazwischenliegenden Raum einfahrbare Elemente ausgebildet sind.

22. Vorrichtung nach Anspruch 21, **dadurch gekennzeichnet, daß** die Vororientierungsmittel durch abwechselnd mit der Grundplatte (301) und der Deckplatte (302) verbundene vertikale Stege (5) oder Stifte ausgebildet sind.

23. Vorrichtung nach Anspruch 14 sowie 19 oder 20, **dadurch gekennzeichnet, daß** die Vororientierungmittel an dem ersten oder einem zwischen dem ersten und dem zweiten Rahmen angeordneten weiteren Rahmen ausgebildet sind oder durch diesen hindurch einfahrbar sind.

## Claims

1. Method for folding an airbag, in particular a headbag or window bag, in which an extended airbag (1) moves continuously relative to a focusing device (2, 3), is folded up and continuously led out of the focusing device, **characterized in that** during its movement relative to the focusing device (2, 3) the airbag (1) passes through a conical or funnel-shaped structure of the focusing device (2, 3) and is folded up to a defined cross section (X2) in the process.

2. Method according to Claim 1, **characterized in that** the airbag (1) is in a completely folded state after leaving the focusing device (2, 3).

3. Method according to Claim 1 or 2, **characterized in that** after leaving the focusing device (2, 3) the airbag (1) has an extent in the longitudinal direction which corresponds essentially to the length of an elongated package (4, 41, 42) of the airbag.

4. Method according to Claim 3, **characterized in that** the airbag (1) is pulled into an elongated package (4, 41, 42) by means of the fixed focusing device (2, 3).

5. Method according to at least one of Claims 1 to 4, **characterized in that** the airbag (1) is firstly extended horizontally and is subsequently tapered in the transverse direction in the horizontal plane as it passes through the focusing device (2, 3), while the vertical extent of the airbag (1) remains essentially constant.

6. Method according to at least one of Claims 1 to 5, **characterized in that** the airbag (1) experiences pre-orientation in terms of its fold position as it passes through the focusing device (2, 3).

7. Method according to at least one of Claims 4 to 6, **characterized in that** the airbag (1) is pulled through the focusing device (2, 3) and into the package (4, 41, 42) by a pulling means (104) which is attached to one end (103) of the airbag (1).

8. Method according to Claim 7, **characterized in that** the pulling means (104) is threaded through the focusing device (2, 3) and the package (4, 41, 42), and a tensile force is then exerted on the pulling means (104).

9. Method according to at least one of Claims 4 to 8, **characterized in that** when the airbag (1) is pulled into the package (4), attachment clips (102) of the airbag (1) are positioned in the vicinity of lateral openings (401) of the package (4) and are subsequently pulled out of the lateral openings (401).

10. Device for carrying out the method according to Claim 1, having a focusing device (2, 3) which folds up an extended airbag (1) as it passes through the focusing device (2, 3), and which is embodied in such a way that the folded-up airbag can be continuously led out of the focusing device (2, 3), **characterized in that** the focusing device (2, 3) has an inlet with an inlet cross section (X1) and an outlet with an outlet cross section (X2), the outlet cross section (X2) being smaller than the inlet cross section (X1), and an airbag (1) being folded up to the outlet cross section (X2) as it passes through the focusing device (2, 3).

11. Device according to Claim 10, **characterized in that** the focusing device (2, 3) is of conical or funnel-shaped design.

12. Device according to Claim 10 or 11, **characterized in that** in the vicinity of the outlet, the focusing device (2, 3) has means for attaching an elongated airbag package (4, 41, 42).

13. Device according to Claim 12, **characterized in that** the elongated package (4, 41, 42) has an inlet opening whose cross section corresponds essentially to the outlet cross section (X2) of the focusing device (2, 3).

14. Device according to at least one of Claims 10 to 13, **characterized in that** the focusing device (2) has a baseplate (201) on which a first and a second rectangular frame (203, 202) are mounted, spaced apart, through which rectangular frames (203, 202) the airbag (1) is led, the first frame (203) forming the inlet cross section (X1) and the second frame (202) forming the outlet cross section (X2) of the focusing device (2).

15. Device according to Claim 14, **characterized in that** one or more further frames (204) are arranged between the two frames (203, 202), the cross section of said further frames (204) corresponding to the tapering profile of the focusing device (2).

16. Device according to Claim 14 or 15, **characterized** that the rectangular frames (202, 203, 204) are of the same height.

17. Device according to at least one of Claims 14 to 16, **characterized in that** the rectangular frame is formed in each case by a U-shaped element (202, 203, 204) which is permanently connected to the baseplate (201).

18. Device according to at least one of Claims 10 to 13, **characterized in that** the focusing device (3) has a baseplate (301), a cover plate (302) arranged over it and two side walls (303) which determine the distance between the baseplate (301) and cover plate (302), are arranged at an angle to one another and are mounted on the baseplate (301).

19. Device according to at least one of Claims 10 to 18, **characterized by** pre-orientation means (5) for pre-orientating the fold profile when the airbag (1) is folded up, said pre-orientation means (5) being arranged between the inlet cross section (X1) and the outlet cross section (X1).

20. Device according to Claim 19, **characterized in that** the pre-orientation means (5) give a concertina-like fold to the airbag (1) which is to be folded.

21. Device according to Claim 18 and 19 or 20, **characterized in that** the pre-orientation means are formed by elements (5) which are connected to the baseplate (301) and/or cover plate (302) or by elements which can be retracted through the baseplate and/or cover plate into the intermediate space.

22. Device according to Claim 21, **characterized in that** the pre-orientation means are formed by vertical webs (5) or pins which are connected alternately to the baseplate (301) and the cover plate (302).

23. Device according to Claim 14 and 19 or 20, **characterized in that** the pre-orientation means are formed on the first frame or on a further frame arranged between the first and the second frame, or can be retracted through the latter.

## Revendications

1. Procédé de pliage d'un coussin à gaz, en particulier d'un coussin gonflable de tête ou d'un coussin gonflable de fenêtre, dans lequel un coussin à gaz (1) déployé est déplacé de manière continue par rapport à un dispositif de focalisation (2, 3), est replié et sorti de manière continue hors du dispositif de focalisation, **caractérisé en ce que** lors de son mouvement relatif par rapport au dispositif de focalisation (2, 3), le coussin à gaz (1) traverse une structure conique ou en forme d'entonnoir, du dispositif de focalisation (2, 3) et est alors replié avec une section transversale définie (X2).

2. Procédé selon la revendication 1, **caractérisé en ce qu'**après avoir quitté le dispositif de focalisation (2, 3), le coussin à gaz (1) se trouve dans un état de pliage achevé.

3. Procédé selon la revendication 1 ou 2, **caractérisé en ce qu'**après avoir quitté le dispositif de focalisation (2, 3), le coussin à gaz (1) présente une extension en direction longitudinale qui correspond sensiblement à la longueur d'un emballage (4, 41, 42) allongé du coussin à gaz.

4. Procédé selon la revendication 3, **caractérisé en ce que** le coussin à gaz (1) est tiré via le dispositif de focalisation (2, 3) dans un emballage (4, 41, 42) allongé.

5. Procédé selon au moins l'une des revendications 1 à 4, **caractérisé en ce que** le coussin à gaz (1) est tout d'abord déployé à l'horizontale et est ensuite aminci en direction transversale dans le plan horizontal lors de son passage à travers le dispositif de focalisation (2, 3), tandis que l'extension verticale du coussin à gaz (1) reste sensiblement constante.

6. Procédé selon au moins l'une des revendications 1 à 5, **caractérisé en ce que** lors de son passage à travers le dispositif de focalisation (2, 3) le coussin à gaz (1) subit une préorientation du point de vue de sa position de pliage.

7. Procédé selon au moins l'une des revendications 4 à 6, **caractérisé en ce que** le coussin à gaz (1) est tiré à travers le dispositif de focalisation (2, 3) et dans l'emballage (4, 41, 42) à l'aide d'un moyen de traction (104) fixé à une extrémité (103) du coussin à gaz (1).

8. Procédé selon la revendication 7, **caractérisé en ce que** le moyen de traction (104) est enfilé à travers le dispositif de focalisation (2, 3) et à travers l'emballage (4, 41, 42) et ensuite, une force de traction extérieure est exercée sur le moyen de traction (104).

9. Procédé selon au moins l'une des revendications 4 à 8, **caractérisé en ce que** lorsque le coussin à gaz (1) est rentré dans l'emballage (4), des pattes de fixation (102) du coussin à gaz (1) sont positionnées dans la région d'ouvertures latérales (401) de l'emballage (4) et ensuite tirées hors des ouvertures latérales (401).

10. Dispositif de mise en oeuvre du procédé selon la revendication 1, comportant un dispositif de focalisation (2, 3), qui replie un coussin à gaz (1) déployé, lorsqu'il traverse le dispositif de focalisation (2, 3), et qui est réalisé de telle sorte que le coussin à gaz replié peut être sorti de manière continue hors du dispositif de focalisation (2, 3), **caractérisé en ce que** le dispositif de focalisation (2, 3) présente une entrée avec une section transversale d'entrée (X1) et une sortie avec une section transversale de sortie (X2), la section transversale de sortie (X2) étant plus petite que la section transversale d'entrée (X1), et un coussin à gaz (1) étant replié sur la section transversale de sortie (X2) lorsqu'il traverse le dispositif de focalisation (2, 3).

11. Dispositif selon la revendication 10, **caractérisé en ce que** le dispositif de focalisation (2, 3) est réalisé conique ou en forme d'entonnoir.

12. Dispositif selon la revendications 10 ou 11, **caractérisé en ce que** le dispositif de focalisation (2, 3) présente dans la région de la sortie des moyens de fixation d'un emballage (4, 41, 42) de coussin à gaz allongé.

13. Dispositif selon la revendication 12, **caractérisé en ce que** l'emballage (4, 41, 42) allongé présente une ouverture d'entrée dont la section transversale correspond sensiblement à la section transversale de sortie (X2) du dispositif de focalisation (2, 3).

14. Dispositif selon au moins l'une des revendications 10 à 13, **caractérisé en ce que** le dispositif de focalisation (2) présente une plaque de base (201) sur laquelle sont montés à distance l'un de l'autre un premier cadre rectangulaire et un deuxième cadre rectangulaire (203/202), à travers lesquels est guidé le coussin à gaz (1), le premier cadre (203) définissant la première section transversale d'entrée (X1) et le deuxième cadre (202) définissant la deuxième section transversale de sortie (X2) du dispositif de focalisation (2).

15. Dispositif selon la revendication 14, **caractérisé en ce qu'**entre les deux cadres (203, 202) est/sont agencé(s) un ou plusieurs autre(s) cadre(s) (204) dont la section transversale correspond au tracé s'amincissant du dispositif de focalisation (2).

16. Dispositif selon 1a revendication 14 ou 15, **caractérisé en ce que** les cadres rectangulaires (202, 203, 204) présentent la même hauteur.

17. Dispositif selon au moins l'une des revendications 14 à 16, **caractérisé en ce que** le cadre rectangulaire est formé par un élément respectif en forme de U (202, 203, 204) qui est relié de manière solidaire à la plaque de base (201).

18. Dispositif selon au moins l'une des revendications 10 à 13, **caractérisé en ce que** le dispositif de focalisation (3) présente une plaque de base (301), une plaque de recouvrement (302) agencée au-dessus de celle-ci, et deux parois latérales (303) agencées en angle l'une par rapport à l'autre, définissant la distance entre la plaque de base (301) et la plaque de recouvrement (302) et fixées sur la plaque de base (301).

19. Dispositif selon au moins l'une des revendications 10 à 18, **caractérisé par** des moyens de préorientation (5) pour préorienter le tracé de pliage lors du pliage du coussin à gaz (1), lesquels sont agencés entre la section transversale d'entrée (X1) et la section transversale de sortie (X2).

20. Dispositif selon la revendication 19, **caractérisé en ce que** les moyens de préorientation (5) confèrent au coussin à gaz (1) à plier un pliage en forme d'accordéon.

21. Dispositif selon la revendication 18 ainsi que selon la revendication 19 ou 20, **caractérisé en ce que** les moyens de préorientation sont formés par des éléments (5) reliés à la plaque de base (301) et/ou à la plaque de recouvrement (302) ou par des éléments susceptibles de rentrer dans l'espace intermédiaire à travers la plaque de base et/ou la plaque de recouvrement.

22. Dispositif selon la revendication 21, **caractérisé en ce que** les moyens de préorientation sont formés par des barrettes verticales (5) ou par des pions reliés en alternance avec la plaque de base (301) et avec la plaque de recouvrement (302).

23. Dispositif selon la revendication 14, ainsi que selon la revendication 19 ou 20, **caractérisé en ce que** les moyens de préorientation sont formés sur le premier cadre ou sur un autre cadre agencé entre le premier cadre et le deuxième cadre et **en ce qu'**ils peuvent rentrer en passant à travers ces cadres.
